# FASCICULE DE BREVET EUROPEEN

(11) **EP 0 585 167 B1**
(45) Date de publication et mention de la délivrance du brevet: **12.03.1997**
(21) Numéro de dépôt: 93402067.8
(22) Date de dépôt: 18.08.1993
(51) Int. Cl.: B60J 10/02

(54) **Vitrage automobile pourvu d'un encadrement en matière polymère et procédé pour sa fabrication**
Verglasung für Kraftfahrzeug mit polymerischen Rahmen und Verfahren zur deren Herstellung
Motorvehicle glazing equipped with a polymeric frame and fabrication process

(30) Priorité: 22.08.1992 DE 4227935
(43) Date de publication de la demande: 02.03.1994
(73) Titulaire: SAINT-GOBAIN VITRAGE, 92400 Courbevoie (FR); VEGLA Vereinigte Glaswerke GmbH, D-52066 Aachen (DE)
(72) Inventeur: Krumm, Helmut, D-52066 Aachen (DE); Wirtz, Franz-Josef, D-5102 Würselen (DE); Schmitz, Uwe, D-52066 Aachen (DE)
(74) Mandataire: Muller, René

(56) Documents cités:
- EP-A- 0 145 443
- PATENT ABSTRACTS OF JAPAN vol. 015, no. 496 (C-0894)16 Décembre 1991 & JP-A-03 217 425 (KANTO SEIKI CO. LTD.) 25 Septembre 1991

## Description

La présente invention concerne un vitrage automobile pourvu d'un encadrement moulé en place en matière polymère. Elle a trait, en outre, à un procédé pour la fabrication d'un tel vitrage automobile.

On connaît divers procédés pour mouler un encadrement en une matière polymère en place directement sur le bord d'un vitrage. Par exemple, il est connu d'après le document EP-A-0 145 443 de munir des vitrages automobiles via le procédé RIM (Reaction Injection Molding) d'un encadrement en polyuréthane. Dans le cas de ce procédé connu, le vitrage est mis en place dans un moule formé de deux moitiés de moule qui définit la cavité de moulage sur le bord du vitrage. Après la fermeture du moule, la cavité de moulage est remplie du mélange de réaction qui s'expanse dans la cavité et forme un corps moulé poreux avec une enveloppe assurant l'étanchéité. Lorsque le mélange de réaction présent à l'intérieur du moule a réagi au point que l'encadrement ne se déforme plus, le moule est ouvert et le vitrage ainsi encadré est retiré du moule.

Il est également connu de mouler un encadrement en un polymère thermoplastique, par exemple, en polychlorure de vinyle, par le procédé de moulage par injection directement en place sur le vitrage (voir par exemple, DE-A-2 855 050 ). Dans ce procédé, le vitrage est également mis en place dans un moule formé de deux moitiés de moule et la cavité de moulage entourant le bord du vitrage est remplie de la matière thermoplastique fondue sous une pression relativement élevée.

Les encadrements montés de cette manière en place sur le vitrage présentent, en règle générale, une lèvre qui dépasse la face périphérique du vitrage et qui, dans l'état monté du vitrage, s'appliquent contre la partie de la carrosserie entourant le vitrage.

Pendant que le véhicule roule, suivant l'agencement concret de l'encadrement et de la lèvre, des bruits perturbateurs peuvent apparaître qui sont à attribuer au fait que d'infimes mouvements relatifs se produisent entre les zones laquées de la carrosserie et la lèvre de l'encadrement en contact avec celles-ci. Pour éliminer cette source de bruit possible, il est connu dans la pratique d'appliquer sur les zones correspondantes de la surface de la lèvre et, le cas échéant, de l'encadrement, a posteriori, une couche de glissement faite d'un ruban de Téflon ou de graisse ou d'huile. De plus, il est connu de pourvoir ces zones a posteriori d'un veloutage tel qu'il est courant, par exemple, pour des profilés d'étanchéité destinés à des vitrages de portière descendants, au niveau des surfaces de glissement. Dans le cas d'un tel veloutage, les zones superficielles correspondantes de l'encadrement sont pourvues, au cours d'une opération séparée du procédé et exécutée a posteriori, d'un revêtement adhérent, qui contient des particules de fibre en des matières adéquates, ce qui réduit fortement le coeffcient de friction au niveau de la surface de glissement et rend possible un déplacement relatif silencieux entre la surface métallique laquée et la surface veloutée de l'encadrement ou de la lèvre.

Le veloutage de l'encadrement a certes donné satisfaction, mais il entraîne des investissements et des frais de main d'oeuvre parce qu'il doit être effectué après le démoulage complet des vitrages encadrés dans le champ électrostatique, ce qui exige des manipulations supplémentaires des vitrages et des frais accrus en matière d'appareillage.

Le document JP-A-03 217 425 divulgue une couche antibruit à base d'une résine thermoplastique. Cette couche ne peut cependant être appliquée que sur l'encadrement une fois refroidi, ce qui rallonge d'autant le temps de fabrication du vitrage.

L'invention a pour but de procurer un vitrage automobile pourvu d'un encadrement moulé en place en une matière polymère, l'encadrement étant pourvu d'un revêtement qui remplit la même fonction qu'un veloutage, mais dont le procédé de fabrication peut cependant être adjoint de manière plus simple au procédé de fabrication même de l'encadrement.

Le vitrage automobile conforme à l'invention est caractérisé en ce que les zones superficielles de l'encadrement destinées à venir en contact avec le cadre de fenêtre de la carrosserie automobile sont revêtues d'un vernis de polyuréthane à deux composants dont l'aspect de surface est du type velours, polymérisable sous l'action de la chaleur.

Les vernis de polyuréthane à deux composants possédant un aspect de surface du type velours, dit soft-look, peuvent être obtenus dans le commerce. Il est connu d'utiliser de tels vernis à effet soft-look pour revêtir des matières plastiques. Cependant, ces vernis connus donnant une surface matte du genre daim sont utilisés jusqu'à présent exclusivement pour leur caractère décoratif ou, dans la mesure où on les utilise dans le domaine fonctionnel, tout au plus pour la surface matte absolument sans reflets qu'ils permettent d'obtenir.

En revanche, des vernis soft-look connus conformes à l'invention sont utilisés dans un tout autre but. Le caractère propre de ces vernis, à savoir le caractère décoratif, n'est pas du tout mis en valeur dans l'application de l'invention parce que les surfaces vernies des vitrages montés sont entièrement dissimulées. Par ailleurs, on ne s'attendrait pas à ce que de tels vernis possédant des propriétés décoratives et optiques conviennent également pour le but souhaité qui implique des propriétés toutes différentes, à savoir les propriétés de friction et de glissement au contact d'une surface métallique laquée.

Un groupe préféré de vernis de polyuréthane soft-look à deux composants est caractérisé en ce que leur composant polyol est constitué d'un polyester aliphatique contenant des groupes hydroxyle contenant un solvant, et leur composant isocyanate est constitué d'un isocyanate aromatique.

Alors que lesdits vernis de polyuréthane peuvent présenter comme tels, c'est-à-dire sans adjonction de pigments, de charges ou d'autres additifs, des propriétés soft-look, c'est-à-dire une surface du genre velours, dans un développement approprié de l'invention, des mélanges de réaction qui contiennent, en outre, des charges inorganiques et/ou des pigments peuvent être utilisés d'une manière particulièrement avantageuse. A titre de charges et/ou de pigments, on peut citer, en particulier, des oxydes métalliques en poudre, de préférence de la poudre de dioxyde de titane et/ou de la poudre d'oxyde de fer.

Le procédé conforme à l'invention pour le revêtement des zones superficielles correspondantes de l'encadrement en polymère réside dans le fait que le mélange de réaction, immédiatement après l'ouverture de la presse à mouler, est appliqué sur le profilé d'encadrement chaud, tant et si bien que le fait de tirer profit de la chaleur propre du profilé d'encadrement raccourcisse sensiblement le temps de réaction du mélange de réaction, le vitrage automobile terminé pouvant alors être retiré du moule immédiatement après l'application du mélange de réaction.

Il s'est avéré d'une manière étonnante que, dans le cas du procédé conforme à l'invention dans lequel le vernis est appliqué sur la surface encore chimiquement active avant le durcissement ou la solidification complète de l'encadrement profilé en polymère, immédiatement après l'ouverture du moule, le séchage et, en particulier, la polymérisation du vernis s'effectuent en un laps de temps extraordinairement bref. Déjà dix secondes environ après l'application du vernis, la couche est sèche et polymérisée au point que l'on peut la toucher et ainsi retirer le vitrage terminé du moule sans que des empreintes ou d'autres marques superficielles subsistent sur la couche de vernis. Dans ce cas, il est bien entendu également important que le moule en fonte massif dans lequel le vitrage est disposé lors de l'opération de revêtement soit dans son ensemble à une température d'environ 60 à 100°C, de sorte que la capacité thermique du moule ainsi que, comme c'est le cas du procédé RIM, la chaleur de réaction à l'intérieur de l'encadrement, assure un apport de chaleur continu à la couche de vernis appliquée, ce qui accélère le processus de séchage et de polymérisation.

En règle générale, il est avantageux, avant l'application du vernis soft-look, d'appliquer sur l'encadrement en polymère une couche d'accrochage ou couche de fond adaptée au vernis en question. Alors que, normalement, la couche de fond exige un temps de séchage de l'ordre de 10 à 30 minutes à température ambiante, le temps de séchage de la couche de fond peut également être considérablement raccourci dans le cas du procédé conforme à l'invention. Ainsi, il s'est avéré, par exemple, que la couche de fond est complètement sèche déjà après quelques secondes, de sorte qu'immédiatement après application de la couche de fond, le vernis lui-même peut déjà être appliqué.

Un exemple de réalisation préféré de l'invention dans lequel un vitrage est pourvu selon le procédé RIM d'un encadrement en polyuréthane, sera décrit ci-après plus en détail avec référence au dessin annexé.

Dans le dessin annexé :
la Fig. 1 illustre un vitrage automobile conforme à l'invention à l'état monté, et
la Fig. 2 illustre le vitrage automobile pendant l'opération de revêtement.

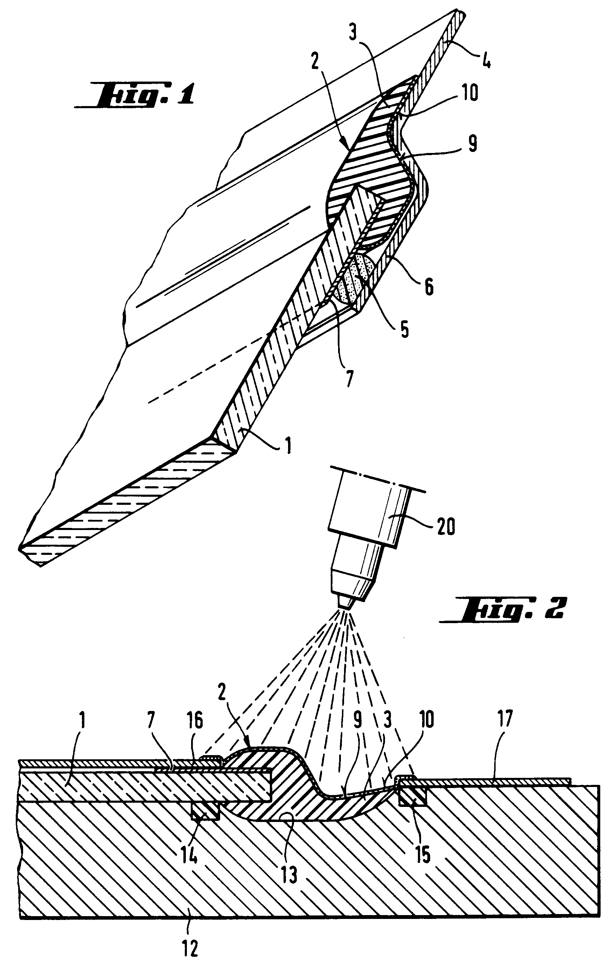

Le vitrage 1 est constitué, par exemple, d'un verre de sécurité qui a subi une trempe thermique. Le bord du verre est pourvu d'un encadrement de pourtour 2 en polyuréthane qui a été moulé en place sur le vitrage par le procédé RIM. L'encadrement 2 est pourvu d'une lèvre 3 qui s'applique sur la surface laquée du cadre de fenêtre 4 de la carrosserie. La fixation du vitrage 1 dans le cadre de fenêtre est assurée par un cordon d'adhésif 5 au moyen duquel le vitrage 1 est collé à l'aile de fixation 6, au niveau de son bord, dans le domaine situé devant l'encadrement 2. Pour éviter que le cordon d'adhésif 5 soit visible de l'extérieur, une couche décorative en forme de cadre 7 est appliquée sur le vitrage 1 dans sa zone marginale et est, en règle générale, constituée d'un émail à cuire opaque qui est cuit pendant le chauffage du vitrage nécessaire pour son bombage et/ou sa trempe.

L'encadrement 2 est pourvu, sur la surface 9 tournée vers le cadre de fenêtre 4, de la couche de vernis 10 conforme à l'invention. L'épaisseur de cette couche de vernis 10 est de 60 à 140 µm. Il s'est avéré que déjà des couches extraordinairement minces d'environ 50 µm seulement suffisent pour garantir de manière sûre et à long terme l'effet souhaité de la suppression des bruits lors des mouvements de glissement entre la lèvre 3 et la surface laquée du cadre de fenêtre 4.

L'encadrement 2 est moulé sur place par le procédé RIM sur le vitrage 1 dans un moule à injection en deux parties. Le moule à injection comprend une moitié de moule inférieure 12 et une moitié de moule supérieure, non représentée, qui sont chacune pourvue d'une cavité de moulage correspondant à l'encadrement 2 à mouler. La cavité de moulage 13 dans la moitié de moule inférieure 12 est pourvue, le long de ses deux lignes de délimitation, de joints d'étanchéité 14, 15 en matière élastique, qui limitent la cavité de moulage d'une part vers le vitrage 1 et d'autre part vers la moitié de moule supérieure. Après l'injection du mélange de réaction dans la cavité de moulage pour former l'encadrement 2, on laisse le moule fermé pendant un laps de temps d'environ 30 à 40 secondes. Au cours de ce laps de temps, le mélange de réaction réagit au point que le moule peut être ouvert et que le vitrage peut être retiré du moule sans qu'une déformation ou un endommagement de l'encadrement RIM 2 soit à craindre. La moitié de moule supérieure est à présent soulevée, de sorte que le vitrage 1 avec l'encadrement moulé 2 se trouve dans la cavité de moulage inférieure 12, l'ensemble de la surface supérieure du vitrage 1 et de l'encadrement 2 étant cependant libre. La température de la moitié de moule 12 et du vitrage 1 est d'environ 80°C.

Dès que le moule est ouvert, la surface du vitrage 1 est recouverte par un cache 16, par exemple, en tôle d'aluminium, allant jusqu'à l'encadrement 2. Le cas échéant, la surface supérieure de la moitié de moule inférieure 12, à l'extérieur de l'encadrement 2, peut également être recouverte par un cache 17 qui peut également être en tôle d'aluminium. Le cache 17 va jusqu'au bord de la lèvre 3. A présent, à l'aide d'un pistolet à peinture 20, on applique le mélange de réaction pour la couche de vernis 10. Grâce à la chaleur propre de la moitié de moule inférieure 12, du vitrage 1 et de l'encadrement 2, la couche 10 sèche et polymérise très rapidement.

Au terme de l'opération de pistolage, les deux caches 16 et 17 sont retirés. Ensuite, la polymérisation de la couche 10 a déjà progressé au point que le vitrage terminé peut être retiré de la moitié de moule inférieure 12, par exemple, au moyen de ventouses, le vitrage pouvant déjà être manipulé avec contact de l'encadrement 2 revêtu.

A titre de vernis softcoating, le vernis à deux composants de la société Mankiewicz Gebr. &Co, pouvant être obtenu dans le commerce sous la marque NEXTEL Suede-Coating 3101 a donné particulièrement satisfaction. Le composant polyol de ce vernis est constitué d'un polyester aliphatique dans un mélange de solvants comprenant de l'acétate de butyle, du toluène et du xylène, auxquels sont mélangés, à titre de pigments inorganiques, de la poudre de dioxyde de titane et de la poudre d'oxyde de fer. Le composant isocyanate de ce vernis est constitué d'un isocyanate aromatique dans un mélange de solvants comprenant du toluène et du xylène. Les deux composants sont mélangés dans des proportions de 8:1 et sont appliqués en une quantité telle que l'on obtienne une épaisseur de la couche séchée d'environ 80 µm.

L'adhérence de cette couche de vernis est déjà suffisante lorsque le mélange de réaction est directement appliqué sur la surface de l'encadrement 2. Dans certaines circonstances, et en particulier lorsque l'encadrement en polymère est fait d'une autre matière que le polyuréthane, il peut cependant être à conseiller d'appliquer sur l'encadrement 2 tout d'abord une couche de fond adaptée spécialement au vernis. Dans le cas de ce NEXTEL-Suede-Coating 3101, on peut, par exemple, utiliser avec succès comme couche de fond le produit commercialisé sous la marque NEXTEL Primer 5523 du même fabricant. Cette couche de fond est constituée également d'un système à deux composants dont le premier composant est une résine époxy dans un mélange de solvants comprenant de la méthyléthylcétone, de l'acétate du butyle et du xylène, et dont l'autre composant, le composant durcisseur, est constitué d'un alkylamide dans un mélange de solvants comprenant de l'alcool tétrahydrofurfurylique, de l'acétate de butyle et du xylène.

## Revendications

1. Vitrage automobile pourvu d'un encadrement moulé (2) en place en une matière polymère, caractérisé en ce que les zones superficielles (9) de l'encadrement (2) destinées à venir en contact avec le cadre de fenêtre (4) de la carrosserie automobile sont revêtues d'un vernis de polyuréthane à deux composants dont l'aspect de surface est du type velours, polymérisable sous l'action de la chaleur.

2. Vitrage automobile suivant la revendication 1, caractérisé en ce que le polyuréthane est obtenu à partir d'un composant polyol et d'un composé isocyanate, le composé polyol étant constitué d'un polyester aliphatique à groupes hydroxyle contenant un solvant et le composant isocyanate étant un isocyanate aromatique.

3. Vitrage automobile suivant la revendication 1 ou 2, caractérisé en ce que le vernis de polyuréthane à deux composants contient des pigments inorganiques et/ou des charges, en particulier, des oxydes métalliques en poudre comme de l'oxyde de titane et de l'oxyde de fer.

4. Procédé de fabrication d'un vitrage automobile suivant l'une quelconque des revendications 1 à 3, caractérisé en ce qu'il comprend notamment l'application d'un vernis dont l'aspect de surface est du type velours, à base d'un polyuréthane thermodurcissable à deux composants obtenu à partir d'un composant polyol, constitué d'un polyester aliphatique dans un mélange de solvants contenant de l'acétate de butyle et/ou du toluène et/ou du xylène, et d'un composant isocyanate, constitué d'un isocyanate aromatique dans un mélange de solvants contenant du toluène et/ou du xylène.

5. Procédé suivant la revendication 4, caractérisé en ce que le vernis contient, en outre, des pigments sous la forme d'oxyde métallique en poudre comme de l'oxyde de titane et de l'oxyde de fer.

6. Procédé suivant la revendication 4 ou 5, caractérise en ce qu'immédiatement après le démoulage de l'encadrement moulé en place sur le vitrage selon le procédé RIM ou le procédé de moulage par injection, le vernis est appliqué sur l'encadrement fraîchement formé, encore chaud.

7. Procédé suivant la revendication 4 ou 5, caractérisé en ce que le vernis est appliqué, immédiatement après la fabrication de l'encadrement selon le procédé RIM ou le procédé de moulage par injection, sur l'encadrement fraîchement formé, tandis que le vitrage avec l'encadrement moulé se trouve encore dans la moitié inférieure du moule.

8. Procédé suivant l'une quelconque des revendications 4 à 7, caractérisé en ce que les zones de l'encadrement à revêtir de vernis soft-look sont pourvues, avant l'application du vernis, d'une couche de fond adaptée au système de vernis.

## Claims

1. Car glazing provided with an in situ moulded framework (2) of a polymer material , characterized in that the surface areas (9) of the framework (2) intended to come into contact with the window frame (4) of the car body are coated with a two-component polyurethane varnish, whose surface appearance is velvety and polymerizable under the action of heat.

2. Car glazing according to claim 1, characterized in that the polyurethane is obtained from a polyol component and an isocyanate component, the polyol component being constituted by an aliphatic polyester having hydroxyl groups containing a solvent and the isocyanate component is an aromatic isocyanate.

3. Car glazing according to claim 1 or 2, characterized in that the two-component polyurethane varnish contains inorganic pigments and/or charges, in particular metal oxides in powder form such as titanium oxide and iron oxide.

4. Process for the production of a car glazing according to any one of the claims 1 to 3, characterized in that it more particularly comprises the application of a varnish, whose surface appearance is velvety, based on a two-component thermosetting polyurethane obtained from a polyol component, constituted by an aliphatic polyester in a mixture of solvents containing butyl acetate and/or toluene and/or xylene, and an isocyanate component, constituted by an aromatic isocyanate in a mixture of solvents containing toluene and/or xylene.

5. Process according to claim 4, characterized in that the varnish also contains pigments in the form of a metal oxide in power form such as titanium oxide and iron oxide.

6. Process according to claim 4 or 5, characterized in that immediately after the demoulding of the in situ moulded framework on the glazing in accordance with the RIM process or injection moulding process, the varnish is applied to the freshly formed and still hot framework.

7. Process according to claim 4 or 5, characterized in that the varnish is applied immediately following the manufacture of the framework according to the RIM process or injection moulding process, to the freshly formed framework, whilst the glazing and the moulded framework are still in the lower half of the mould.

8. Process according to any one of the claims 4 to 7, characterized in that the areas of the framework to be coated with soft-look varnish are provided, prior to the application of the varnish, with a base coat matched to the varnish system.

## Patentansprüche

1. Autoglasscheibe mit einem angeformten Rahmen (2) aus einem Polymer, **dadurch gekennzeichnet,** daß die für die Berührung mit dem Fensterrahmen (4) der Autokarosserie bestimmten Oberflächenbereiche (9) des Rahmens (2) mit einem unter Wärmeeinwirkung aushärtenden Zweikomponenten-Polyurethanlack mit veloursartiger Oberfläche beschichtet sind.

2. Autoglasscheibe nach Anspruch 1, dadurch gekennzeichnet, daß der Polyurethanlack das Reaktionsprodukt einer Polyolkomponente und einer Isocyanatkomponente ist, wobei die Polyolkomponente aus einem lösungsmittelhaltigen, aliphatischen, hydroxylgruppenhaltigen Polyester, und die Isocyanatkomponente aus einem aromatischen Isocyanat besteht.

3. Autoglasscheibe nach Anspruch 1 oder 2, dadurch gekennzeichnet, daß der Zweikomponenten-Polyurethanlack anorganische Pigmente und/oder Füllstoffe, insbesondere pulverförmige Metalloxide wie Titanoxid und Eisenoxid, enthält.

4. Verfahren zur Herstellung einer Autoglasscheibe nach einem der Ansprüche 1 bis 3, dadurch gekennzeichnet, daß es insbesondere die Verwendung eines Lackes mit einem veloursartigen Oberflächenaspekt auf der Basis eines wärmehärtenden Zweikomponenten-Polyurethans umfaßt, das von einer Polyolkomponente aus einem aliphatischen Polyester in einem Butylacetat und/oder Toluol und/oder Xylol enthaltenden Lösungsmittelgemisch und einer Isocyanatkomponente aus einem aromatischen Isocyanat in einem Toluol und/oder Xylol enthaltenden Lösungsmittelgemisch gebildet wird.

5. Verfahren nach Anspruch 4, dadurch gekennzeichnet, daß der Lack zusätzlich Pigmente in Form pulverförmiger Metalloxide wie Titanoxid und Eisenoxid enthält.

6. Verfahren nach Anspruch 4 oder 5, dadurch gekennzeichnet, daß der Lack unmittelbar nach dem Entformen des nach dem RIM-Verfahren oder nach dem Spritzgießverfahren an die Glasscheibe angeformten Rahmens auf den frisch gebildeten noch heißen Rahmen aufgetragen wird.

7. Verfahren nach Anspruch 4 oder 5, dadurch gekennzeichnet, daß der Lack unmittelbar nach der Herstellung des Rahmens nach dem RIM-Verfahren oder dem Spritzgießverfahren auf den frisch gebildeten Rahmen aufgetragen wird, während die Glasscheibe mit dem angeformten Rahmen noch in der unteren Formhälfte liegt.

8. Verfahren nach einem der Ansprüche 4 bis 7, dadurch gekennzeichnet, daß die mit dem Soft-look-Lack zu beschichtenden Bereiche des Rahmens vor dem Auftragen des Lacks mit einem auf das Lacksystem abgestimmten Primer versehen werden.
